Europäisches Patentamt

European Patent Office

Office européen des brevets

(11) Publication number: **0 180 166**
**B1**

# EUROPEAN PATENT SPECIFICATION

(45) Date of publication of patent specification: **25.07.90**

(51) Int. Cl.⁵: **G 21 C 3/32**

(21) Application number: **85113641.6**

(22) Date of filing: **26.10.85**

(54) **A method for protecting the guide tube members of a nuclear fuel assembly and guiding pin for carrying out the method.**

(30) Priority: **02.11.84 SE 8405509**

(43) Date of publication of application:
**07.05.86 Bulletin 86/19**

(45) Publication of the grant of the patent:
**25.07.90 Bulletin 90/30**

(84) Designated Contracting States:
**BE DE FR**

(56) References cited:
**EP-A-0 098 774**
**EP-A-0 140 588**
**DE-A-2 308 800**
**FR-A-2 533 741**

(73) Proprietor: **AB ASEA-ATOM**
**S-721 83 Västeras (SE)**

(72) Inventor: **Almén, Olle**
**Svalörtsgatan 3**
**S-722 25 Västeras (SE)**
Inventor: **Collin, Per**
**Stafettgatan 34**
**S-722 41 Västeras (SE)**

(74) Representative: **Boecker, Joachim, Dr.-Ing.**
**Rathenauplatz 2-8**
**D-6000 Frankfurt a.M. 1 (DE)**

Courier Press, Leamington Spa, England.

## Description

The invention relates to a method for protecting the guide tube members of a nuclear fuel assembly according to the precharacterising part of claim 1. A nuclear fuel assembly for which this method can be used is known, for example, from FR-A-2 529 704.

In the fuel assembly disclosed in the aforementioned publication the slitted end portions of the guide members are very vulnerable. By the slitting of said end portion a plurality of axially directed flaps are formed, which can easily be broken when the slitted portion is not in its place in the top tie plate, that is, during removal and reinstallation of the top tie plate, and at intermediate stages.

The invention aims at developing a method of the above-mentioned kind which provides good protection for the axially directed flaps or fingers of the guide tube member during removal and reinstallation of the top tie plate and during intermediate storage of a guide tube member without demanding time consuming special measures having to be taken.

In order to achieve this aim the invention suggests a method according to the introductory part of claim 1, which is characterized by the features of the characterizing part of claim 1.

A guiding pin for carrying out the method according to the invention is characterized by the features of claim 3.

The invention will now be described in greater detail with reference to the accompanying drawings showing in

Figures 1-5 a guide tube member in partial vertical section through the centre axis of a substantially cylindrical through-hole in a top tie plate included in a nuclear fuel assembly designed for a pressurized water reactor, whereby the different figures show in numerical order for one and the same guide tube member the consecutive stages during the removal and reinstallation of the top tie plate;

Figure 6 in vertical section along line VI-VI in Figure 7 an upper end portion of the same guide tube member prior to removal or after reinstallation of the top tie plate;

Figure 7 a partial horizontal section along line VII-VII in Figure 6.

In the drawings, 3 designates a top tie plate in a fuel assembly for a pressurized water reactor. The top tie plate has a plurality of substantially cylindrical through-holes 4 with a vertical centre axis 1. A guide tube member 2 for a control rod pin is inserted with an upper end portion into each through-hole 4. The guide tube member 2 has a vertical centre axis 1' and contains a guide tube 11 with an inner diameter d1, and a top sleeve 12. The lower top sleeve portion surrounds the upper end portion of the guide tube 11 and is fixed thereto. In normal condition the top sleeve 12 is inserted into a through-hole 4 provided in the top tie plate 3. The substantially circular-cylindrical wall 4' of this through-hole is provided with a horizontal, annular slot 6. The upper end portion of the top sleeve 12 is provided with six vertical slits 13 being substantially evenly distributed along the circumference of the sleeve. The sleeve portions which are located between the slits have a substantially constant wall thickness and form six resilient fingers 10. Each finger 10 has a circle arc-shaped, radial projection 14 with a radially outwardly facing surface of a convex, double-curved shape and a radially inwardly facing surface of a concave, double-curved shape. Together, these projections 14 form a substantially annular sleeve portion 5, divided into annular segments having a double-curved, convex, radially outward facing surface and a double curved, concave radially inward facing surface. When inserting a guide tube member 2 into a corresponding through-hole 4, the fingers 10 are first bent resiliently inwardly and then — when their circle arc-shaped projections arrive at the level of the annular slot 6 — move back radially outwardly thus causing the above-mentioned, substantially annular portion 5 of the top sleeve 12 — which portion is divided into annular segments and has a relatively large outer diameter — to snap into the slot 6. The sleeve portion 5, preferably the entire top sleeve 12, has a substantially constant wall thickness. The top sleeve 12 is made from a thin-walled, metallic tube material, for example a tube produced by rolling or drawing.

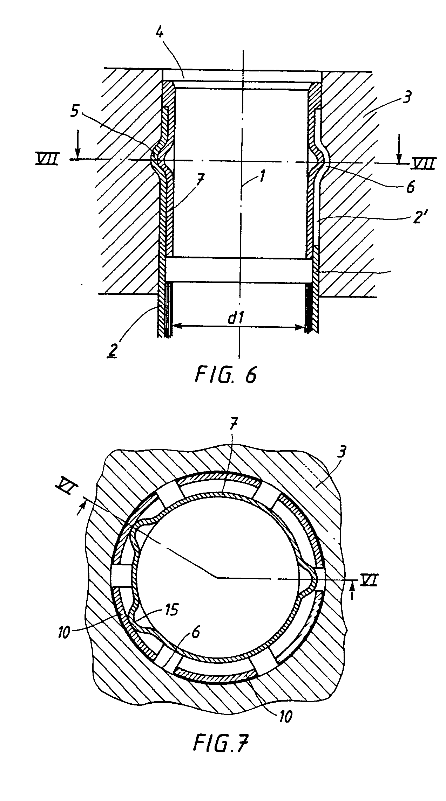

For the purpose of retaining the annular sleeve portion 5 of the top sleeve 12 in the slot 6, a metallic, substantially hollow-cylindrical locking sleeve 7 with a substantially constant wall thickness is inserted into the top sleeve 12 without any significant play. The locking sleeve 7 is fixed in the axial direction by means of at least one bulging or projecting part which is arranged in engagement with the concave side of the annular sleeve portion 5 of the top sleeve 12. The projecting part of the locking sleeve 7 may be annular or may consist of at least one wart embossed in the wall of the locking sleeve 7. In the embodiment shown in Figures 6 and 7, three radially outwardly directed warts 15 are embossed in the wall of the locking sleeve 7 by means of an expansion tool which is inserted into the locking sleeve 7 when the latter has been inserted into the top sleeve 12. The locking sleeve 7 may be made from a material the ductility of which is either considerably higher than or equal with the ductility of the material from which the top sleeve 12 is made. In the latter case the locking sleeve may consist of the same material as the top sleeve 12, with the average wall thickness of the locking sleeve being chosen preferably smaller than 80 % of the average wall thickness of the top sleeve 12. When the top tie plate 3 is to be removed — for example, for the purpose of inserting new fuel rods — the locking sleeve 7 must first be withdrawn. This involves a destructive deformation of the locking sleeve 7, whereas the top sleeve 12 remains intact. After the top tie plate 3 has been re-applied, a new locking sleeve 7 is inserted and expanded. The withdrawal of the locking sleeve is performed by means of a tool having a plurality of withdrawal hooks and being inserted into the locking sleeve 7 in such a way that the withdrawal hooks engage with the lower end surface of the locking sleeve 7.

In a method according to the invention, the locking sleeve 7 in each one of the guide tube members 2 is first removed. Thereafter, a corresponding guiding pin 8 is inserted into each of the holes 4, said guiding pin being oriented in the direction of the guide tube 11. The guiding pin 8 has a lower circular-cylindrical portion 8', an upper circular cylindrical portion 8'', and a relatively thin, intermediate circular-cylindrical portion 8''', which is positioned immediately adjacent to the upper portion 8''. The portion 8''' has an axial length which is preferably longer than the thickness H of the top tie plate 3 and shorter than 3H. Further, the guiding pin 8 is formed with a circular-cylindrical flange 16, located immediately below the relatively thin portion 8'''. The portions 8'', 8' and the flange 16 are dimensioned with such maximum diameters as to be able to be inserted with slip fit into the hole 4, into the guide tube 11, and into the top sleeve 12, respectively. A circular cylindrical part 17 of the guiding pin 8, located between the flange 16 and the lower portion 8', has a diameter which is somewhat smaller than the maximum diameter of the lower portion 8' but larger than the diameter of the relatively thin portion 8'''.

The upper portion 8'' has a horizontal annular end surface 18, in which an annular, downwardly-facing slot 9 is provided. The radially inner wall of this slot 9 consists of an extension of the circular-cylindrical surface of the relatively thin portion 8'''.

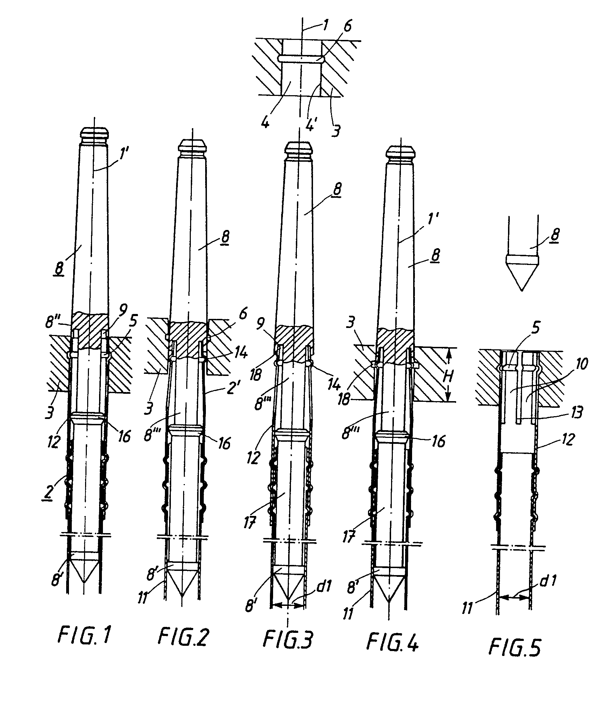

During the above-mentioned insertion of a guiding pin 8 into each one of the through-holes 4 (see Figures I-5), the downwardly-facing annular surface 18 of each guiding pin is first brought into contact with the upper end surfaces of the fingers 10. Thereafter, the top tie plate 3 is lifted. This movement causes the fingers 10 of each guide tube member 2 to be bent resiliently radially inwards by the fact that the annular protrusion 5 is forced out of the slot 6. When the contact between the surface 18 and the end surfaces of the fingers 10 is broken, the guiding pin 8 falls down, and the end portions of the fingers 10 slip into the annular slot 9 (Figure 2). The fingers 10 maintain this position in relation to the slot 9 during the continued lifting of the top tie plate 3 to a level above the upper ends of the guiding pins 8, and also after the top tie plate 3 has been removed as well as during subsequent corrective maintenance — for example, exchange of fuel rods — and as well during the reinstallation of the top tie plate 3. Thus the delicate slitted part of each of the top sleeves 12 is well protected against contact with the lifting devices used during the repair work and the components handled by said lifting devices. During reinstallation, the top tie plate 3 is lowered down towards all the guide tube members 2 while at the same time these members are to be guided into a respective through-hole 4. This is done without difficulty since each guiding pin 8 — above the slot 9 — tapers in the direction towards its upper end. When the top tie plate during its reinstallation has been brought approximately into its normal position in relation to the guide tube members 2 — as shown in Figure 4 — all the guiding pins 8 are removed, whereafter the radially outwardly protruding sleeve portion 5 of each guide tube member 2 snaps into a corresponding slot 6. Finally, a new locking sleeve 7 is inserted into each one of the guide tube members 2 and is fixed in the same way as the original one.

**Claims**

1. A method for protecting the guide tube members (2) of a nuclear fuel assembly during removing and/or reinstalling of the top tie plate (3) of the fuel assembly and/or during intermediate stages, said guide tube members (2) having a vertical centre axis (1) and a circular cross-section, and being each inserted, with a slitted upper end portion (2'), in a withdrawable manner into a respective, substantially circular-cylindrical through-hole (4) in said top tie plate (3), said slitted end portion having an annular protrusion (5) adapted to snap into an annular slot (6) provided in the wall of said through-hole (4), said end portion being locked in said snapped position by means of a locking sleeve (7) inserted in the end portion, characterized in that for removing the top tie plate from the guide tube members the locking sleeves (7) are first removed, that thereafter a guiding pin (8) oriented in the direction of the guide tube (11) is inserted from above into each one of said through-holes (4), said guiding pin being formed with a lower portion (8'), an upper portion (8''), and an intermediate, relatively thin portion (8''') located immediately adjacent to said upper portion, said upper portion (8'') and said lower portion (8') being dimensioned to be inserted with slip fit into said through-hole (4) and into said guide tube member (2), respectively, said intermediate portion (8'''), at least in the vicinity of said upper portion, having a diameter that is by so much smaller than the inner guide tube diameter (d1) as to allow the adjacent upper portion (8'') to be formed with an annular, downwardly facing surface (18) in which an annular, downwardly facing slot (9) is provided large enough to allow the insertion of said slitted upper end portion 2', that the insertion of the guiding pin (8) from above into said through-hole (4) is blocked by contact made between said downwardly facing surface (18) of the guiding pin (8) and the upwardly facing surfaces of a plurality of axially directed fingers (10) formed by said slitted end portion of the guide tube member (2) located in the through-hole, that thereafter said top tie plate (3) is lifted and said fingers (10) — because said annular protrusion (5) leaves said annular slot (6) — are bent radially inwardly and are inserted with their ends into said annular, downwardly facing slot (9) and are held in position in said slot during the continued removal of the top tie plate (3) in relation to said guide tube member (2).

2. A method according to claim 1, characterized in that, after the top tie plate has been removed, the guiding pins are further held in their position relative to their corresponding guide tube members (2) until the reinstallation of the top tie plate and up to the point where a normal relation between the top tie plate (3) and the guide tube members (2) is restored, that the guiding pins (8) are then removed, and that each one of said slitted guide tube portions (2') is again provided with a corresponding locking sleeve (7).

3. A guiding pin for carrying out the method according to claim 1 or 2, characterized in being formed with a lower portion (8'), an upper portion (8''), and an intermediate, relatively thin portion (8''') located immediately adjacent to said upper portion, said upper portion (8'') and said lower portion (8') being dimensioned to be inserted with slip fit into said through-hole (4) of the top tie plate and into said guide tube member (2), respectively, said intermediate portion (8'''), at least in the vicinity of said upper portion, having a diameter that is by so much smaller than the inner guide tube diameter (d1) as to allow the adjacent upper portion (8'') to be formed with an annular, downwardly facing surface (18) in which an annular, downwardly facing slot (9) is provided large enough to allow the insertion the slitted upper end portion 2' of the guide tube member.

**Patentansprüche**

1. Verfahren zum Schutz der Führungsrohrglieder (2) eines nuklearen Brennelementbündels während der Wegnahme und/oder der Wiederanbringung der oberen Verbundplatte (3) des Brennelementbündels und/oder während dazwischen liegender Zustände, wobei die genannten Führungsrohrglieder (2) eine vertikale zentrale Achse (1) und einen kreisförmigen Querschnitt haben und jedes mit einem geschlitzten oberen Endabschnitt (2') in einer zurückziehbaren Weise in ein entsprechendes im wesentlichen kreiszylindrisches durchgehendes Loch (4) in der oberen Verbundplatte (3) eingeführt ist, wobei ferner der geschlitzte Endabschnitt einen ringförmigen Vorsprung (5) hat, der so beschaffen ist, daß er in eine ringförmige Nut (6) in der Wand des durchgehenden Loches (4) einrasten kann, und wobei der genannte Endabschnitt in der eingerasteten Stellung mittels einer Verschlußhülse (7) blockiert wird, die in den Endabschnitt eingeschoben ist, dadurch gekennzeichnet, daß zur Wegnahme der oberen Verbundplatte von den Führungsrohrglieder zunächst die Verschlußhülse (7) entfernt wird, daß danach von oben her in jedes der durchgehenden Löcher (4) ein Führungsstift (8), der in Richtung des Führungsrohrs (11) orientiert ist, eingeführt wird, daß der Führungsstift einen unteren Abschnitt (8') einen oberen Abschnitt (8'') und einen mittleren, relativ dünnen Abschnitt (8''')

hat, der unmittelbar an den oberen Abschnitt anschließt, daß der obere Abschnitt (8'') und der untere Abschnitt (8') so bemessen sind, daß sie mit einem Gleitsitz in das durchgehende (4) bzw. das Führungsrohrglied (2) einführbar sind, daß der mittlere Abschnitt (8''') zumindest in der Nähe des genannten oberen Abschnittes einen Durchmesser hat, der um soviel kleiner ist als der innere Durchmesser (d1) des Führungsrohrs, daß der benachbarte obere Abschnitt (8'') mit einer nach unten gerichteten ringförmigen Fläche (18) versehen sein kann, in welcher eine nach unten gerichtete ringförmige Nut (9) vorhanden ist, die groß genug ist, um die Einführung des geschlitzten oberen Enabschnittes (2') zu ermöglichen, daß die Einführung des Führungsstiftes (8) von oben in das durchgegende Loch (4) blockiert wird durch Kontakt zwischen der nach unten gerichteten Fläche (18) des Führungsstiftes (8) und der nach oben gerichteten Fläche einer Vielzahl von achsial gerichteten Fingern (10), die von dem genannten geschlitzten Endabschnitt des Führungsrohrgliedes (2), das sich in dem durchgehenden Loch befindet, geformt werden, daß danach die oberen Verbundplatte (3) abgehoben wird und die Finger (10) — weil der ringförmige Vorsprung (5) die ringförmige Nut (6) verläßt — radial nach innen gebogen werden und mit ihren Enden in die nach unten gerichtete Nut (9) einmünden und in dieser Nut während der weiteren Entfernung der oberen Verbundplatte (3) relativ zum Führungsrohrglied (2) in ihrer Lage festgehalten werden.

2. Verfahren nach Anspruch 1, dadurch gekennzeichnet, daß nach Entfernung der oberen Verbundplatte die Führungsstifte weiter in ihrer Position relativ zu den entsprechenden Führungsrohrgliedern (2) bis zur Wiedereinsetzung der oberen Verbundplatte gehalten werden, und zwar solange, bis die normale Beziehung zwischen der Verbundplatte (3) und Führungsrohrglieder (2) wiederhergestellt ist, daß die Führungsstifte (8) dann entfernt werden und daß jeder der geschlitzten Führungsrohrabschnitte (2') wieder mit einer entsprechenden Verschlußhülse (7) versehen wird.

3. Führungsstift zur Durchführung des Verfahrens nach Anspruch 1 oder 2, dadurch gekennzeichnet, daß der Führungsstift einen unteren Abschnitt (8'), einen oberen Abschnitt (8'') und eine mitteleren, relativ dünnen Abschnitt (8'' ') hat, welcher unmittelbar an den genannten oberen Abschnitt anschließt, daß der obere Abschnitt (8'') und der untere Abschnitt (8') so bemessen sind, daß sie mit einem Gleitsitz in das durchgehenden Loch (4) in der oberen Verbundplatte beziehungsweise das Führungsrohrglied (2) einführbar ist, daß der mittlere Abschnitt (8'''), zumindest in der Nähe des genannten oberen Abschnittes, einen Durchmesser hat, der um soviel kleiner ist als der innere Durchmesser (d1) des Führungsrohrs, daß der benachbarte obere Abschnitt (8'') mit einer nach unten gerichteten ringförmigen Fläche (18) versehen werden kann, in welcher eine nach unten gerichtete Nut (9) vorhanden ist, die groß genug ist, um die Einführung des geschlitzten oberen Endabschnittes des Führungsrohrgliedes zu ermöglichen.

## Revendications

1. Procédé de protection des tubes-guides (2) d'un assemblage combustible de réacteur nucléaire pendant le démontage et/ou le remontage de la plaque supérieure de fixation (3) de l'assemblage combustible et/ou pendant des stades intermédiaires, ces tubes-guides (2) ayant un axe (1) vertical et une section transversale circulaire et étant chacun insérés, par une partie supérieure d'extrémité (2') fendue, d'une manière amovible, dans un trou traversant (4) cylindrique de section transversale sensiblement circulaire, ménagé dans la plaque supérieure de fixation (3) cette partie d'extrémité fendue ayant une partie saillante (5) annulaire destinée à s'encliqueter dans une gorge (6) annulaire ménagée dans la paroi du trou traversant (4), la partie d'extrémité étant bloquée en la position encliquetée au moyen d'une douille de blocage (7) insérée dans la partie d'extrémité, caractérisé en ce que, pour enlever la plaque supérieure de fixation des tubes-guides, on enlève d'abord les douilles de blocage (7), on enfile ensuite une tige de guidage (8) orientée dans la direction du tube-guide (11) par le haut dans chacun des trous traversant (4), la tige-guide étant formée d'une partie inférieure (8') d'une partie supérieure (8'') et d'une partie intermédiaire (8''') relativement mince et immédiatement adjacente à la partie supérieure, la partie supérieure (8'') et la partie inférieure (8') ayant des dimensions telles qu'elles peuvent être insérées avec un jeu glissant dans le trou traversant (4) et dans le tube-guide (2) respectivement, la partie intermédiaire (8''') ayant, au moins à proximité de la partie supérieure, un diamètre qui est tellement plus petit que le diamètre intérieur (d1) du tube guide, qu'il permet à la partie supérieure (8'') adjacente d'avoir une surface (18) annulaire tournée vers le bas dans laquelle est ménagée une gorge (9) annulaire tournée vers le bas, suffisamment grande pour permettre l'insertion de la partie supérieure d'extrémité (2') fendue, l'insertion de la tige de guidage (8) par le haut dans le trou traversant (4) étant bloquée par le contact entre la surface (18) tournée vers le bas de la tige de guidage (8) et les surfaces tournées vers le haut de plusieurs doigts (10) dirigés axialement et formés par la partie d'extrémité fendue du tube-guide (2) placé dans le trou traversant, et ensuite on soulève la plaque supérieure de fixation (3) et les doigts (10) — la partie saillante (5) annulaire quittant la gorge (6) annulaire — sont courbés radialement vers l'intérieur et sont insérés par leur extrémité dans la gorge (9) annulaire tournée vers le bas et sont maintenus en position dans cette gorge tant que la plaque supérieure de fixation (3) est enlevée du tube-guide (2).

2. Procédé suivant la revendication 1, caractérisé en ce qu'après avoir enlevée la plaque supérieure de fixation, on maintient encore les tiges de guidage en leur position par rapport à leur tube-guide (2) correspondant jusqu'au remontage de la plaque supérieure de fixation et jusqu'au point de rétablissement d'une relation normale entre la plaque supérieure de fixation (3) et les tubes-guides (2), on enlève ensuite les tiges de guidage (8) et on munit chacune des parties fendues (2') de tube-guide à nouveau d'une douille de blocage (7) correspondante.

3. Tige de guidage pour la mise en oeuvre du procédé suivant la revendication 1 ou 2, caractérisée en ce qu'elle est formée d'une partie inférieure (8') d'une partie supérieure (8'') et d'une partie intermédiaire (8''') relativement mince et immédiatement adjacente à la partie supérieure, la partie supérieure (8'') et la partie inférieure (8') ayant des dimensions qui leur permettent d'être insérées avec jeu glissant dans le trou traversant (4) de la plaque supérieure de fixation et dans le tube guide (2) respectivement, la partie intermédiaire (8''') ayant, au moins à proximité de la partie supérieure, un diamètre qui est tellement plus petit que le diamètre intérieur (d1) du tube guide qu'il permet de ménager dans la partie supérieure (8'') adjacente une surface (18) annulaire, tournée vers le bas, dans laquelle est prévue une gorge (9) annulaire, tournée vers le bas, suffisamment grande pour permettre l'insertion de la partie fendue (2') de l'extrémité supérieure du tube-guide.

FIG.1    FIG.2    FIG.3    FIG.4    FIG.5

FIG. 6

FIG.7